# EUROPÄISCHE PATENTSCHRIFT

(11) **EP 0 321 412 B1**
(45) Veröffentlichungstag und Bekanntmachung des Hinweises auf die Patenterteilung: **08.09.1993**
(21) Anmeldenummer: 88810857.8
(22) Anmeldetag: 12.12.1988
(51) Int. Cl.: C08G 73/12, C08F 222/40

(54) **Di-oder Polycyanatverbindungen, substituierte Bicyclo[2.2.1]hept-5-en-2,3-dicarbonsäureimide und Thermoplaste enthaltende Gemische sowie deren Verwendung**
Di- or polycyanate compounds, substituted bicyclo[2.2.1]5 heptene-dicarbon imides, blends containing thermoplastics, and their use
Composés di- ou -polycyanates, bicyclo[2.2.1]5 heptène-2,3-dicarbonimides, mélanges contenant des thermoplastes et leur utilisation

(30) Priorität: 17.12.1987 CH 4925/87
(43) Veröffentlichungstag der Anmeldung: 21.06.1989
(73) Patentinhaber: CIBA-GEIGY AG, 4002 Basel (CH)
(72) Erfinder: Kramer, Andreas, Dr., CH-3186 Düdingen (CH); Perritaz, Francis, CH-1630 Bulle (CH)

(56) Entgegenhaltungen:
- EP-A- 0 265 374
- DE-A- 3 111 403
- DE-A- 3 517 395
- DE-A- 3 608 253

## Beschreibung

Die vorliegende Erfindung betrifft heisshärtbare Gemische, enthaltend Di- oder Polycyanatverbindungen, substituierte Bicyclo[2.2.1]hept-5-en-2,3-dicarbonsäureimide und Thermoplaste, deren Verwendung und die aus den Gemischen durch Härtung erhaltenen Formstoffe.

In der DE-OS 30 26 017 werden Gemische aus Polycyanatverbindungen und Polymaleinimiden offenbart, die sich katalytisch härten lassen.

Aus der EP-Patentanmeldung 0 175 648 sind heisshärtbare Stoffgemische aus substituierten Bicyclo[2.2.1]hept-5-en-2,3-dicarbonsäureimiden und Polymaleinimiden bekannt.

Diese vorbekannten Gemische sind in organischen Lösungsmitteln nur mässig löslich, und die durch Aufschmelzen dieser Gemische hergestellten Mischungen entmischen sich beim Abkühlen auf Raumtemperatur wieder.

Von D.A. Shimp et al. wurde an der 18. Internationalen SAMPE-Konferenz, 7.-9. Oktober 1986, 351-362, über Eigenschaften von Mischungen aus Triazinharzen mit Thermoplasten berichtet.

Es wurde gefunden, dass Gemische aus Di- oder Polycyanatverbindungen, substituierten Bicyclo[2.2.1]hept-5-en-2,3-dicarbonsäureimiden und Thermoplasten eine gute Verarbeitbarkeit aufweisen, sowohl zum Schmelzimprägnieren geeignet sind als auch in organischen Lösungsmitteln gut löslich sind, und dass die in der Schmelze hergestellten Mischungen bei Raumtemperatur stabil sind, d.h., sich nicht wieder entmischen.

Gegenstand vorliegender Erfindung sind somit heisshärtbare Gemische, enthaltend
(a) 5 bis 95 Gew.-% mindestens einer aromatischen Di- oder Polycyanatverbindung oder eines Präpolymeren davon,
(b) 95 bis 5 Gew.-% mindestens einer Verbindung der Formel I oder II 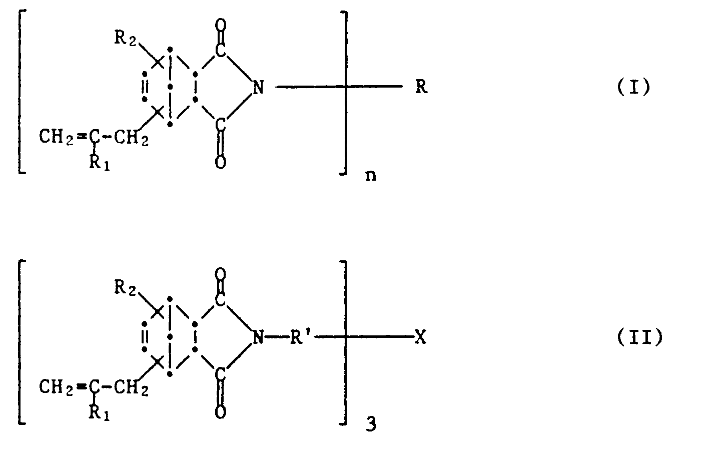 oder eines Präpolymeren einer Verbindung der Formel I oder II,
(c) 0 bis 50 Gew.-%, bezogen auf die Summe von (a) und (b), mindestens einer Verbindung der Formel III 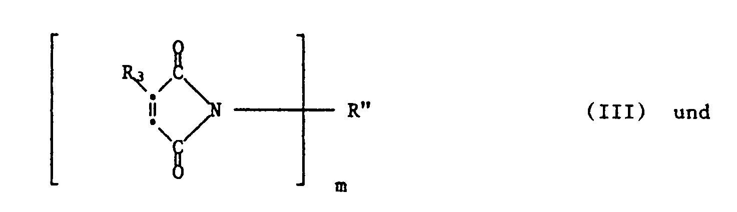
(d) 0,1 bis 50 Gew.-%, bezogen auf die Summe von (a) und (b), mindestens eines Thermoplasten mit einer Glasumwandlungstemperatur von mindestens 120°C,
worin in den Formeln
R₁, R₂ und R₃ unabhängig voneinander je ein Wasserstoffatom oder Methyl bedeuten,
n 1 oder 2 und m 2 oder 3 bedeuten,
R, falls n 1 bedeutet, ein Wasserstoffatom, Alkyl mit 1-12 C-Atomen, Alkenyl mit 3-6 C-Atomen, Cycloalkyl mit 5-8 C-Atomen, Aryl mit 6-10 C-Atomen oder Benzyl, oder, falls n 2 bedeutet, -CₚH₂ₚ- mit p = 2-20, Arylen mit 6-10 C-Atomen oder eine Gruppe der Formel IV 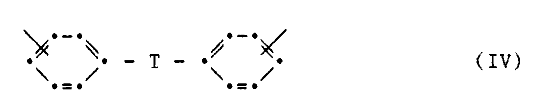
mit T = Methylen, Isopropyliden, CO, O, S oder SO₂ bedeutet, X für 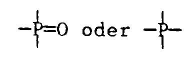
steht und R′ -C_{q}H_{2q}- mit q = 2-20, -CᵣH₂ᵣ-O-mit r = 2-6, meta- oder para-Phenylen, meta- oder para-Phenylenoxy bedeutet, wobei das Sauerstoffatom an die Gruppe X gebunden ist, und
R˝ einen m-wertigen organischen Rest mit 2-30 C-Atomen darstellt.

Vorzugsweise enthalten die erfindungsgemässen Gemische die Komponente (a) in einer Menge von 20 bis 80 Gew.-%, die Komponente (b) in einer Menge von 80 bis 20 Gew.-%, die Komponente (c), bezogen auf die Summe von (a) und (b), in einer Menge von 0 bis 30 Gew.-% und die Komponente (d), bezogen auf die Summe von (a) und (b), in einer Menge von 5 bis 40 Gew.-%.

Insbesondere enthalten die erfindungsgemässen Gemische die Komponente (a) in einer Menge von 20 bis 60 Gew.-% , die Komponente (b) in einer Menge von 40 bis 80 Gew.-% und die Komponente (d) in einer Menge von 10-30 Gew.-%.

Die in den erfindungsgemässen Gemischen als Komponente (a) enthaltenen aromatischen Di- oder Polycyanatverbindungen sind bekannt und zum Teil im Handel erhältlich. Beispielsweise können als Di- und Polycyanatverbindungen solche der Formel V

R'''(̵OCN)_{y} (V)

verwendet werden, worin R‴ ein einen oder mehrere aromatische Kerne enthaltender Rest ist, der sich von zwei- oder mehrwertigen, einoder mehrkernigen, unsubstituierten oder substituierten Phenolen durch Entfernen der OH-Gruppen ableitet, wobei jede Cyanatgruppe direkt an einen aromatischen Kern gebunden ist, und y eine Zahl von 2 bis 10 bedeutet. Geeignete Substituenten sind dabei beispielsweise Alkyle, Alkoxy, Alkenyle, Halogenatome, vorzugsweise Chlor-oder Bromatome, und Nitrogruppen.

Als Beispiele von geeigneten Di- oder Polycyanatverbindungen seien genannt:
Dicyanatobenzol, 1,3,5-Tricyanatobenzol, 1,3-, 1,4-, 1,6-, 1,8-, 2.6-oder 2,7-Dicyanatonaphthalin, 1,3,6-Tricyanatonaphthalin, 4,4′-Dicyanatobiphenyl, Bis(4-cyanatophenyl)methan, 2,2-Bis(4-cyanatophenyl)propan, 2,2-Bis(3,5-dichlor-4-cyanatophenyl)propan, 2,2-Bis-(3,5-dibrom-4-dicyanatophenyl)propan, Bis(4-cyanatophenyl)äther, Bis(4-cyanatophenyl)thioäther, Bis(4-cyanatophenyl)sulfon, Tris(4-cyanatophenyl)phosphit, Tris(4-cyanatophenyl)phosphat, Bis(3-chlor-4-cyanatophenyl)methan und cyanatisierte Novolake.

Die Di- und Polycyanatverbindungen der Formel V können beispielsweise nach dem in der DE-OS 25 29 486 offenbarten Verfahren hergestellt werden, indem man Di- oder Poly(trialkylammonium)phenolate der zwei- oder mehrwertigen Phenole in Gegenwart von Trialkylaminen mit Halogencyan, vorzugsweise Chlor- oder Bromcyan, umsetzt. Solche Phenolate können sich beispielsweise von den folgenden Phenolen der Formeln VI bis VIII 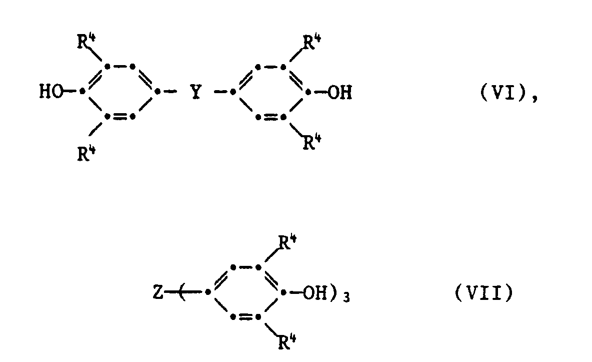
und 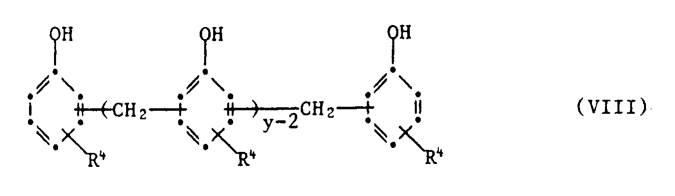
ableiten, worin
R⁴ je für ein Wasserstoff-, Halogenatom, Alkyl mit 1 bis 9 C-Atomen, Alkenyl mit bis zu 4 C-Atomen, Alkoxy mit 1 bis 4 C-Atomen,
Y für eine einfache Bindung, Alkylen mit bis zu 5 C-Atomen, Cycloalkylen, vorzugsweise Cyclohexylen, -SO₂-, -SO-, -S-, -CO-, -OCO-O-, -O-oder -CH₂OCH₂- steht,
Z für

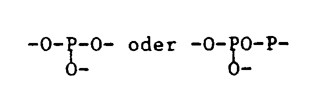

steht und y eine Zahl von 2 bis 10 bedeutet.

Die in den erfindungsgemässen Gemischen als Komponente (a) enthaltenen Präpolymeren von Di- oder Polycyanatverbindungen werden durch Polymerisation der genannten Cyanatverbindungen in Gegenwart einer Säure, wie Mineral- oder Lewissäure, einer Base, wie Natriumhydroxid, eines Natriumalkoholates, eines tertiären Amins oder eines Salzes, wie Natriumcarbonat oder Lithiumchlorid, als Katalysator erhalten und weisen bevorzugt ein durchschnittliches Molekulargewicht von mindestens 400 und höchstens 6000 auf.

Die erfindungsgemässen Gemische können als Komponente (a) auch Mischungen von Di- oder Polycyanatverbindungen mit den entsprechenden Präpolymeren enthalten. Beispielsweise enthalten viele der handelsüblich erhältlichen Dicyanatverbindungen, die sich von Bisphenolen und Halogencyan ableiten, zum Teil die entsprechenden Präpolymeren.

Vorzugsweise enthalten die erfindungsgemässen Gemische als Komponente (a) eine Dicyanatverbindung oder deren Mischung mit dem entsprechenden Präpolymer.

In den Verbindungen der Formel I kann R eine gerad- oder verzweigtkettige Alkylgruppe mit 1-12 C-Atomen bedeuten, wie Methyl, Aethyl, Isopropyl, n-Butyl, Isopentyl, n-Hexyl, 2-Aethyl-hexyl, n-Decyl und n-Dodecyl, vorzugsweise Alkyl mit 1-8 C-Atomen. R in der Bedeutung einer Alkenylgruppe mit 3-6 C-Atomen kann ebenfalls geradkettig oder verzweigt sein, wie Allyl, Methallyl, 2-Butenyl und 3-Hexenyl, vorzugsweise Allyl.

Wenn R eine Cycloalkylgruppe bedeutet, kann es sich um eine Cyclopentyl-, Cyclohexyl-, Cycloheptyl- oder Cyclooctylgruppe handeln, vorzugsweise um Cyclohexyl.

R in der Bedeutung einer Arylgruppe kann unsubstituiertes Phenyl oder eine durch eine oder zwei Methylgruppen substituierte Phenylgruppe sein, wie Tolyl oder Xylyl, oder auch Naphthyl. Bevorzugt ist die Phenylgruppe. Stellt R eine Gruppe -CₚH₂ₚ- dar, so kann es sich um geradkettige oder verzweigte Reste handeln, wie Aethylen, Propylen, Trimethylen, Tetramethylen, Hexamethylen, Octamethylen und Dodecamethylen. Vorzugsweise bedeutet R eine Gruppe -(CH₂)ₚ- mit p = 2 bis 12. Bedeutet R eine Gruppe der Formel IV, so ist diese vorzugsweise in 4,4′-Stellung an die N-Atome gebunden.

R kann in der Bedeutung einer Arylengruppe mit 6-10 C-Atomen z.B. eine m-Phenylen-, p-Phenylen-, 1,3-Naphthylen-, 1,4-Naphthylen-, 1,5-Naphthylen- oder 2,6-Naphthylengruppe bedeuten.

Wenn R eine Gruppe der Formel IV bedeutet, steht T vorzugsweise für die Methylengruppe, O oder SO₂.

Bevorzugte Verbindungen der Formel I sind solche, worin R₁ und R₂ je ein Wasserstoffatom bedeuten und R, falls n = 1 ist, für Wasserstoff, Alkyl mit 1-8 C-Atomen, Allyl, Cyclohexyl, Phenyl oder Benzyl steht, oder, falls n = 2 ist, für -(CH₂)ₚ- mit p = 2-12, m- oder p-Phenylen oder für eine Gruppe der Formel IV steht, worin T die Methylengruppe, O oder SO₂ bedeutet.

Besonders bevorzugt sind Verbindungen der Formel I, worin R₁ und R₂ ein Wasserstoffatom und R, falls n = 1 ist, Allyl, oder falls n = 2 ist, -(CH₂)₆- oder 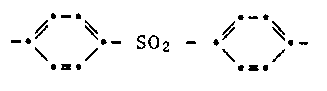
und insbesondere 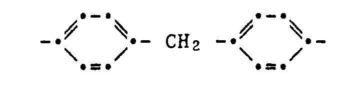
bedeuten. Ganz besonders bevorzugt enthalten die erfindungsgemässen Gemische als Komponente (b) Allyl-bicyclo[2.2.1]hept-5-en-2,3-dicarbonsäure-N-allylimid, Bis[4-(allyl-bicyclo[2.2.1]hept-5-en-2,3-dicarbonsäureimidophenyl)]methan oder N,N′-Hexamethylen-bis-(allyl-bicyclo-2.2.1]hept-5-en-2,3-dicarbonsäureimid) oder ein Gemisch dieser Verbindungen.

Beispiele für spezifische Verbindungen der Formel I sind:
Allyl-bicyclo[2.2.1]hept-5-en-2,3-dicarbonsäure-N-methylimid,
Allyl-bicyclo[2.2.1]hept-5-en-2,3-dicarbonsäure-N-allylimid,
Allyl-bicyclo[2.2.1]hept-5-en-2,3-dicarbonsäure-N-(2-äthylhexyl)-imid,
Allyl-bicyclo[2.2.1]hept-5-en-2,3-dicarbonsäure-N-cyclohexylimid,
Allyl-bicyclo[2.2.1]hept-5-en-2,3-dicarbonsäure-N-phenylimid,
Allyl-bicyclo[2.2.1]hept-5-en-2,3-dicarbonsäure-N-benzylimid,
N,N′-Aethylen-bis-(allyl-bicyclo[2.2.1]hept-5-en-2,3-dicarbonsäureimid),
N,N′-Hexamethylen-bis-(allyl-bicyclo[2.2.1]hept-5-en-2,3-dicarbon-säureimid),
N,N′-Dodecamethylen-bis-(allyl-bicyclo[2.2.1]hept-5-en-2,3-dicarbonsäureimid),
Bis-[4-(allyl-bicyclo[2.2.1]hept-5-en-2,3-dicarbonsäureimidophenyl)]methan,
Bis[4-(methallyl-bicyclo[2.2.1]hept-5-en-2,3-dicarbonsäureimidophenyl)]methan,
N,N′-p-Phenylen-bis(allyl-bicyclo[2.2.1]hept-5-en-2,3-dicarbonsäureimid),
Bis[4-(allyl-bicyclo[2.2.1]hept-5-en-2,3-dicarbonsäureimidophenyl)]äther,
Bis[4-(allyl-bicyclo[2.2.1]hept-5-en-2,3-dicarbonsäureimidophenyl)]sulfon,
Allyl-methyl-bicyclo[2.2.1]hept-5-en-2,3-dicarbonsäure-N-allylimid,
Allyl-methyl-bicyclo[2.2.1]hept-5-en-2,3-dicarbonsäure-N-(2-äthyl-hexyl)imid,
Allyl-methyl-bicyclo[2.2.1]hept-5-en-2,3-dicarbonsäure-N-phenylimid,
N,N′-Hexamethylen-bis-(allyl-methyl-bicyclo[2.2.1]hept-5-en-2,3dicarbonsäureimid),
Bis[4-(allyl-methyl-bicyclo[2.2.1]hept-5-en-2,3-dicarbonsäureimidophenyl)]methan, Bis[4-(methallyl-methyl-bicyclo[2.2.1]hept-5-en-2,3-dicarbonsäureimidophenyl)]sulfon.

Die Imide der Formel I können auf an sich bekannte Weise, z.B. analog dem in der europäischen Patentanmeldung 105 024 beschriebenen Verfahren durch Umsetzen eines Anhydrids der Formel IX 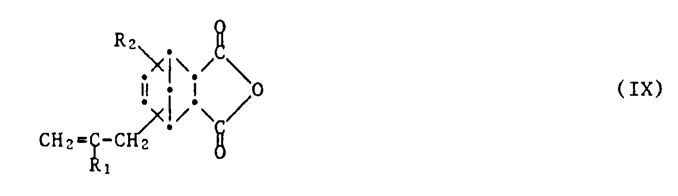
mit einer Verbindung der Formel X

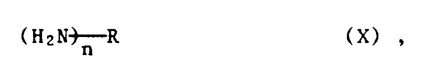

worin
R, R₁, R₂ und n die unter Formel I angegebene Bedeutung haben, bei erhöhter Temperatur und unter Abdestillieren des bei der Reaktion entstehenden Wassers hergestellt werden. Sofern es sich bei den Verbindungen der Formel X um Ammoniak oder niedrigsiedende Monoamine handelt, ist ein Ueberschuss dieser Reaktanden zu empfehlen. Diamine sind vorteilhaft in stöchiometrischem Verhältnis einzusetzen. Die Umsetzung kann ohne Lösungsmittel oder in Gegenwart eines inerten Lösungsmittels, das für die azeotrope Entfernung des Wassers verwendbar ist (Schleppmittel) erfolgen. Die Temperatur der Umsetzung kann zwischen 100 und 250°C liegen.

Wenn in den Verbindungen der Formel II R′ -C_{q}H_{2q}- oder -CᵣH₂ᵣO-darstellt, so kann es sich um geradkettige oder verzweigte Alkylen-bzw. Alkylenoxygruppen handeln. Als Beispiele seien genannt: 1,2-Aethylen, 1,3- und 1,2-Propylen, Tetramethylen, Pentamethylen, 2,2-Dimethyl-1,3-propylen, Hexamethylen, Heptamethylen, Octamethylen, Decamethylen, Dodecamethylen, Tetradecamethylen, Pentadecamethylen, Hexadecamethylen, Octadecamethylen und Eicosylen; Aethylenoxy, n-Propylenoxy, 1,2-Propylenoxy, n-Butylenoxy, n-Pentylenoxy oder n-Hexylenoxy. Bevorzugt sind geradkettige Gruppen -C_{q}H_{2q}-oder -CᵣH₂ᵣ-O-mit q = 2-6, besonders 2-4 C-Atomen, und r = 2-4 C-Atomen.

R₁ und R₂ stellen in Formel II bevorzugt je ein Wasserstoffatom dar. Besonders bevorzugt sind Verbindungen der Formel II, worin R′ -(CH₂)_{q}-mit q = 2-4, meta- oder para-Phenylen, meta- oder para-Phenylenoxy bedeutet.

Die Verbindungen der Formel II können auf an sich bekannte Weise hergestellt werden, indem man eine Verbindung der Formel XI 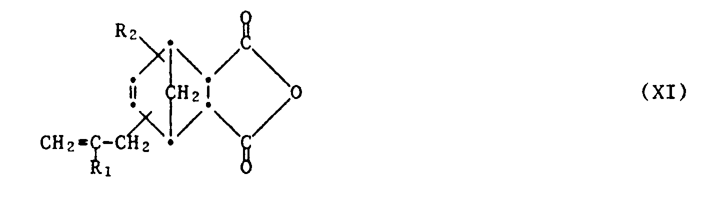
bei erhöhter Temperatur und unter Abdestillieren des bei der Reaktion entstehenden Wassers mit einer Verbindung der Formel XII

[H₂N-R′]₃-X (XII)

umsetzt, wobei für R₁, R₂, R′ und X das oben Angegebene gilt.

Die Umsetzung kann ohne Lösungsmittel oder in Gegenwart eines inerten Lösungsmittels, das für die azeotrope Entfernung des Wassers verwendbar ist (Schleppmittel, wie Toluol und Xylole) erfolgen. Die Temperaturen für die Umsetzung in Gegenwart eines Lösungsmittels können zwischen 100°C und Rückflusstemperatur liegen. Die Umsetzung in der Schmelze erfolgt zweckmässig bei Atmosphärendruck bei Temperaturen zwischen 100 und 250°C, insbesondere 130 und 220°C. Die Umsetzung in Gegenwart eines inerten Lösungsmittels ist bevorzugt.

Verbindungen der Formel II, worin 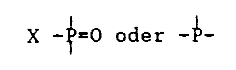
und R′ -CᵣH₂ᵣ-O-, meta- oder para-Phenylenoxy darstellen, können nach einem abgeänderten Verfahren auch dadurch erhalten werden, dass man eine Verbindung der Formel XIII 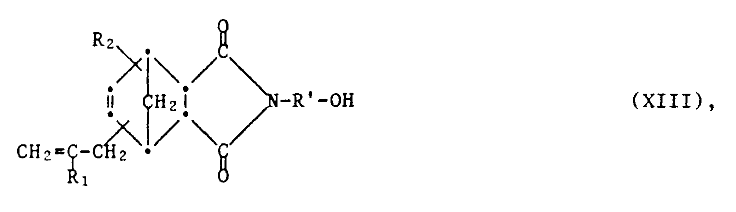
worin R₁ und R₂ die unter Formel II angegebene Bedeutung haben und R′ -CᵣH₂ᵣ-O-, meta- oder para-Phenylenoxy darstellt, in Gegenwart einer Base im Molverhältnis von mindestens 1:3 mit einem Phosphoroxyhalogenid oder einem Phosphortrihalogenid, besonders Phosphoroxychlorid, Phosphortribromid oder Phosphortrichlorid, umsetzt.

Als Basen eignen sich z.B. tertiäre Amine, wie Triäthylamin, Tri-n-butylamin, Pyridin und Dimethylanilin. Diese Umsetzung wird zweckmässig in einem inerten organischen Lösungsmittel, wie Toluol oder Xylolen, bei Temperaturen zwischen -50°C und +50°C, besonders 0-30°C, durchgeführt.

Unter Umständen kann es zweckmässig sein, bei den in Gegenwart eines inerten Lösungsmittels durchgeführten obigen Reaktionen ein Antioxidans mitzuverwenden.

Die Verbindungen der Formeln XI, XII und XIII sind bekannt oder können nach an sich bekannten Methoden hergestellt werden. Verbindungen der Formel XI können z.B. nach dem in der US-Patent 3.105.839 beschriebenen Verfahren erhalten werden, indem man Natrium-Cyclopentadienid oder Natrium-Methylcyclopentadienid mit einem Allyl- oder Methallylhalogenid umsetzt, worauf sich eine Diels-Alder-Reaktion mit Maleinsäureanhydrid anschliesst. Obgleich in der US Patentschrift angegeben wird, dass die Allylgruppe in 7-Stellung des bicyclischen Systems gebunden ist, zeigen neuere Untersuchungen, dass eine isomere Mischung in Bezug auf die Stellung der Allyl- bzw. Methallylgruppe (in 1- und 6-Position) und auch auf die Endo- und Exokonfiguration des Anhydridteils gebildet wird. Verbindungen der Formel XIII können durch Umsetzung eines Anhydrids der Formel XI mit den entsprechenden Aminoalkoholen H₂N-R′-OH hergestellt werden, wobei diese Umsetzung ebenfalls bei erhöhter Temperatur und unter Abdestillieren des bei der Reaktion entstehenden Wassers vorgenommen wird. Verbindungen der Formel XII mit 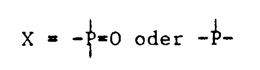
können z.B. durch Umsetzung von Aminoalkoholen H₂N-R′-OH mit Phosphoroxyhalogeniden oder Phosphortrihalogeniden erhalten werden. Die Präpolymeren von Verbindungen der Formel I oder II können durch bis zu fünfstündigem Erhitzen einer Verbindung der Formel I oder II auf Temperaturen zwischen 180° und 220°C erhalten werden.

In den Verbindungen der Formel III kommen als organische Reste R˝ bei m = 2 z.B. in Betracht:
-CₚH₂ₚ- mit p = 2-20, besonders -(CH₂)ₚ- mit p = 2-12,
-CH₂CH₂SCH₂CH₂-, Arylen mit 6-10 C-Atomen, Xylylen, Cyclopentylen, Cyclohexylen, 1,4-Bis(methylen)cyclohexylen, der Rest des Bicyclohexylmethans oder Reste der Formeln XIV oder XV

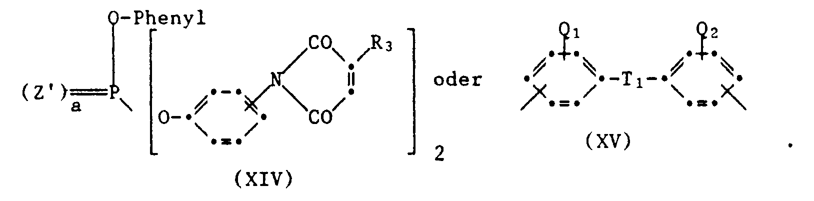

Stellt m die Zahl 3 dar, so bedeutet R˝ z.B. einen Rest der Formel XVI

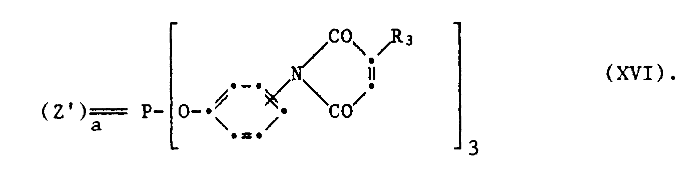

In den obigen Formeln XIV bis XVI bedeutet T₁ Methylen, Isopropyliden, CO, O, S, SO₂, -P=O(Q₃), -NQ₃- (Q₃ = C₁-C₄-Alkyl), -N=N-, -CONH-, -COO-, -NQ₃-CO-X′-CO-NQ₃-, -O-CO-X′-CO-O-, 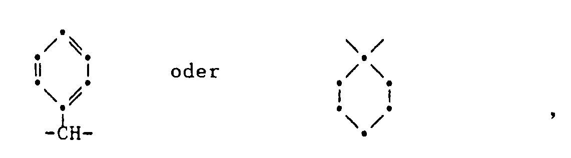
a ist 0 oder 1,
Z′ stellt 0 oder S dar,
Q₁ und Q₂ bedeuten unabhängig voneinander ein Halogenatom, besonders Chlor oder Brom, Methyl oder Aethyl und insbesondere ein Wasserstoffatom,
X′ ist die direkte Bindung, -C_{b}H_{2b}- mit b = 1-12, Arylen mit 6-10 C-Atomen, Xylylen, Cyclopentylen oder Cyclohexylen und R₃ hat die oben angegebene Bedeutung.

Als spezifische Beispiele für Maleinimide der Formel III, welche in den erfindungsgemässen Gemischen enthalten sein können, seien genannt:
N,N′-Aethylen-bis-maleinimid,
N,N′-Hexamethylen-bis-maleinimid,
N,N′-m-Phenylen-bis-maleinimid,
N,N′-p-Phenylen-bis-maleinimid,
N,N′-4,4′-Diphenylmethan-bis-maleinimid,
N,N′-4,4′-3,3′-Dichlor-diphenylmethan-bis-maleinimid,
N,N′-4,4′-Diphenyläther-bis-maleinimid,
N,N′-4,4′-Diphenylsulfon-bis-maleinimid,
N,N′-m-Xylylen-bis-maleinimid,
N,N′-p-Xylylen-bis-maleinimid,
N,N′-4,4′-2,2-Diphenylpropan-bis-maleinimid,
das N,N′-Bis-maleinimid des 4,4′-Diamino-triphenylphosphats,
das N,N′-Bis-maleinimid des 4,4′-Diamino-triphenylphosphits,
das N,N′-Bis-maleinimid des 4,4′-Diamino-triphenylthiophosphats,
das N,N′,N˝-Trismaleinimid des Tris-(4-aminophenyl)-phosphats,
das N,N′,N˝-Trismaleinimid des Tris-(4-aminophenyl)-phosphits und
das N,N′,N˝-Trismaleinimid des Tris-(4-aminophenyl)-thiophosphats.

Als Verbindungen der Formel III sind solche bevorzugt, worin m die Zahl 2, R₃ ein Wasserstoffatom und R˝ -(CH₂)ₚ- mit p = 2-12, m- oder p-Phenylen, m- oder p-Xylylen, 1,4-Cyclohexylen, 1,4-Bis(methylen)cyclohexylen, den Rest des 4,4′-Bicyclohexylmethans und vor allem einen in 4,4′-Stellung gebundenen Rest der Formel XV bedeuten, worin Q₁ und Q₂ je ein Wasserstoffatom und T₁ O, CH₂ oder SO₂ darstellen. Ganz besonders bevorzugt ist das N,N′-4,4′-Diphenylmethan-bismaleinimid.

Als Thermoplaste (d) können in den erfindungsgemässen härtbaren Stoffgemischen all jene bekannten Polymere eingesetzt werden, die eine Glasumwandlungstemperatur von mindestens 120°C aufweisen und mit dem Gemisch aus Polycyanaten und Dicarbonsäureimiden mischbar sind. Anhand ihrer Eigenschaften sind als Thermoplaste vorzugsweise Polyimide, Polyätherimide, Polyamidimide, Polysulfone, Polyäthersulfone oder Polyätherketone geeignet. Dabei werden besonders Thermoplaste mit einer Glasumwandlungstemperatur von 150 bis 350, insbesondere von 170 bis 320°C, bevorzugt.

Falls ein Polysulfon als Thermoplast (d) eingesetzt wird, eignen sich z.B. Verbindungen mit der wiederkehrenden Einheit der Formel

―A―SO₂―

worin A eine zweiwertige, gegebenenfalls durch Aethersauerstoffatome und/oder zweiwertige aliphatische Gruppen unterbrochene aromatische Gruppe bedeutet.

Die einzusetzenden Polysulfone können in bekannter Weise z.B. dadurch erhalten werden, dass man entweder (a) ein Sulfonylhalogenid der Formel HA₁SO₂X₁ oder (b) ein Gemisch eines Disulfonylhalogenids der Formel X₁SO₂A₁SO₂X₁ mit einer sulfonylhalogenidfreien Verbindung der Formel HA₂H, worin A₁ und A₂ gleich oder verschieden sind und jeweils eine zweiwertige gegebenenfalls durch Ethersauerstoffatome und/oder zweiwertige aliphatische Gruppen unterbrochene aromatische Gruppe bedeuten und X₁ ein Chlor- oder Bromatom darstellt, in einem inerten Lösungsmittel in Anwesenheit eines Lewis-Säure-Katalysators erhitzt. Die nach Verfahren (a) hergestellten Polysulfone enthalten die wiederkehrende Einheit

―A₁―SO₂―,

wohingegen die nach Verfahren (b) hergestellten Polysulfone die wiederkehrende Einheit

―A₁―SO₂―A₂―SO₂―

aufweisen.

In den erfindungsgemässen Gemischen bevorzugt verwendete Polysulfonharze sind solche, welche Aethergruppen in der wiederkehrenden Einheit aufweisen, jedoch von seitenständigen Hydroxylgruppen frei sind. Es handelt sich dabei besonders um Polysulfone mit einer wiederkehrenden Einheit der Formel

―OA₃OA₄SO₂A₄―,

worin A₃ und A₄ zweiwertige Arylen-, insbesondere Phenylengruppen, die durch Chlor oder C₁-C₄-Alkyl, beispielsweise Methylgruppen substituiert sein können, darstellen. Man erhält derartige Polysulfone in an sich bekannter Weise durch Reaktion eines Dialkalimetallsalzes eines zweiwertigen Phenols der Formel HOA₃OH mit einem Bis-(monochloraryl)-sulfon der Formel ClA₄SO₂A₄Cl in Dimethylsulfoxid. Bevorzugtere Polysulfonharze sind solche mit einer wiederkehrenden Einheit der Formel

―OA₅―Y―A₅OA₆―SO₂―A₆―

worin A₅ und A₆ jeweils eine gegebenenfalls durch Chlor oder C₁-C₄-Alkylgruppen, wie z.B. Methylgruppen, substituierte Phenylengruppe und Y eine Kohlenstoff-Kohlenstoffbindung, die -SO₂- oder eine aliphatische Kohlenwasserstoffgruppe, insbesondere eine solche mit nicht mehr als vier Kohlenstoffatomen wie z.B. solche der Formel
―CH₂― oder 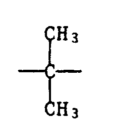
bedeuten.

Besonders bevorzugt sind thermoplastische Polysulfonharze mit wiederkehrenden Einheiten der Formel XVII 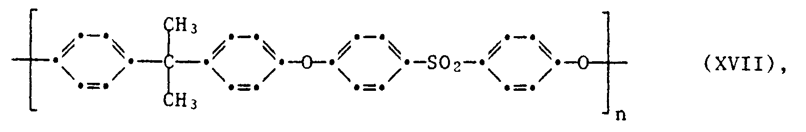
wobei n im Durchschnitt vorzugsweise einen Wert von 50-120 hat.

Besonders vorteilhafte Polysulfone sind z.B. die bei der Union Carbide Corporation erhältlichen Verbindungen, wie z.B. "Polysulfone Udel P1800", das nach Angabe des Herstellers einen Schmelzpunkt im Bereich von 350-370°C, eine Wärmeformbeständigkeit (ASTM-Spezifikation D648) von 175°C hat und im Durchschnitt pro Molekül 50-80 wiederkehrende Einheiten der Formel V enthält, wobei man von einem Molekulargewichtsbereich von ungefähr 22 000-35 000 ausgehen kann.

Weiterhin geeignet ist eine bei Union Carbide Corporation unter dem Namen "Polysulfone P2300" erhältliche ähnliche Substanz; nach Angaben des Herstellers hat diese einen Molekulargewichtsbereich von 30 000-50 000, wobei man davon ausgehen kann, dass die Substanz im Durchschnitt pro Molekül ungefähr 68-113 wiederkehrende Einheiten der Formel XVII enthält, sowie eine bei Union Carbide Corporation unter dem Namen "Polysulfone P3500" erhältliche ähnliche Substanz; nach Angaben des Herstellers hat diese einen Molekulargewichtsbereich, der zwischen dem von "Polysulfone Udel P1800" und jenem von "Polysulfone P2300" liegt; das Molekulargewicht beträgt ca. 35 000.

Erfindungsgemäss können als Komponente (d) auch Gemische von zwei oder mehreren Thermoplasten verwendet werden.

Besonders geeignet als Thermoplaste (d) sind Polyimide, wie
- Polyimide mit Phenylindaneinheiten, wie sie z.B. im US-Patent 3,856,752 und in der EP-A 92 524 beschrieben sind,
- Homo- und Copolyimide aus mindestens einer aromatischen Tetracarbonsäure und mindestens einem aromatischen Diamin, wie z.B. im US-Patent 4,629,777 offenbart und
- Homo- und Copolyimide, wie sie z.B. in den EP-A 162 017, und EP-A 181 837 sowie im US-Patent 4,629,685 beschrieben sind.

Bevorzugte Thermoplaste (d) sind auch Polyätherimide, wie z.B. die unter der Bezeichnung Ultem® (z.B. als Ultem® 1000) angebotenen Produkte der Fa. General Electric oder die im US-Patent 4,196,144 offenbarten Polyätherimide. Weitere bevorzugte Thermoplaste sind Polyäthersulfone, wie z.B. Victrex PES 100 P der ICI, Udel P 1800 der Amoco oder solche, die im US-Patent 4,667,010 offenbart werden.

Geeignete Polyamidimide sind beispielsweise die in den US-Patenten 3,894,114, 3,948,835, 3,926,911 und 3,950,408 beschriebenen Verbindungen.

Die Herstellung der erfindungsgemässen Stoffgemische kann in an sich bekannter Weise durch Vermahlen und Vermengen oder durch Vermischen in einem inerten organischen Lösungsmittel, z.B. Dichlormethan oder Dimethylformamid, oder durch Aufschmelzen der Komponenten, wobei man die Komponenten (a), (b) und (d) mit der gegebenenfalls zu verwendenden Komponente (c) vermischt und zwischen 100 bis 180°C aufschmilzt, vorgenommen werden. Die Herstellung erfolgt vorzugsweise durch Lösen der Komponenten in einen organischen Lösungsmittel, wobei man die Komponente (a) und (b) mit der gegebenenfalls zu verwendenden Komponente (c) mit der Komponente (d) gegebenenfalls unter Erwärmen löst und das Lösungsmittel anschliessend durch Abdestillieren, vorzugsweise am Rotationsverdampfer, entfernt.

Den erfindungsgemässen Gemischen können auch übliche Zusatzstoffe, wie Füllstoffe, Weichmacher, Pigmente, Farbstoffe, Formtrennmittel oder flammhemmende Stoffe, zugesetzt werden.

Die Verarbeitung der erfindungsgemässen Stoffgemische kann gegebenenfalls in Gegenwart eines Härtungskatalysators vorgenommen werden.

Als inerte organische Lösungsmittel eignen sich z.B. N,N-Dimethylformamid, N,N-Dimethylacetamid, N-Methylpyrrolidon, Dichlormethan, Chloroform und Aethylenglykolmonoalkyl- oder -dialkyläther mit 1-4 C-Atomen in den Alkylgruppen.

Als Katalysatoren können z.B. Imidazole, tertiäre Amine, organische Metallsalze, Peroxide sowie Brønsted-Oxosäuren oder Derivate davon, besonders deren Ester, Anhydride, Halogenide oder Amide bzw. Ammoniumsalze mit Stickstoff enthaltenden Basen, und Lewissäuren oder Komplexe von Lewissäuren mit Basen, insbesondere mit Aminen, eingesetzt werden.

Als Imidazole können beispielsweise 2-Methylimidazol, 2-Undecylimidazol, 2-Heptadecylimidazol, 2-Phenylimidazol, 2-Ethyl-4-methylimidazol, 1-Benzyl-2-methylimidazol, 1-Propyl-2-methylimidazol, 1-Cyanoäthyl-2-methylimidazol, 1-Cyanoäthyl-2-äthyl-4-methylimidazol, 1-Cyanoäthyl-2-undecylimidazol, 1-Cyanoäthyl-2-phenylimidazol, 1-Guanaminoäthyl-2-methylimidazol und Additionsprodukte zwischen Imidazol und Trimellitsäure verwendet werden.

Geeignete tertiäre Amine sind z.B. N,N-Dimethylbenzylamin, N,N-Dimethylanilin, N,N-Dimethyltoluidin, N,N-Dimethyl-p-anisidin, p-Halogen-N,N-dimethylanilin, 2-N-Ethylanilinoethanol, Tri-n-butylamin, Pyridin, Chinolin, N-Methylmorpholin, Triethanolamin, Triethylendiamin, N,N,N′,N′-Tetramethylbutandiamin und N-Methylpiperidin.

Als organische Metallsalze eignen sich beispielsweise Bleinaphthenat, Bleistearat, Zinknaphthenat, Zinkoctoat, Zinnoleat, Zinnoctoat, Dibutylzinnmaleat, Mangannaphthenat, Kobaltnaphthenat und Acetylacetoneisen.

Geeignete Peroxide sind beispielsweise Benzoylperoxid, Lauroylperoxid, Octanoylperoxid, Acetylperoxid, p-Chlorbenzoylperoxid, Di-tert.-butyldiperphthalat, Dicumylperoxid, Cyclohexanonperoxid, tert.-Butylhydroperoxid und Diisopropylperoxydicarbonat.

Als Oxosäuren können z.B. anorganische bzw. Mineralsäuren oder organische Säuren, wie z.B. organische Phosphor-Sauerstoff-Säuren, organische Schwefel-Sauerstoff-Säuren oder Halogen enthaltende Carbonsäuren genannt werden.

Als Mineralsäuren können z.B. genannt werden Perchlorsäure, Fluorsulfonsäure, Chlorsulfonsäure, Schwefelsäure, Phosphorsäure, Polyphosphorsäure, phosphorige Säure und unterphosphorige Säure.

Geeignete organische Phosphor-Sauerstoff-Säuren sind z.B. Phosphon-und Phosphinsäuren. Es kommen jeweils P-Alkyl oder P-Arylderivate in Frage, z.B. bevorzugt solche mit je 1-6 C-Atomen in den Alkylgruppen bzw. 6-10 C-Atomen in den Arylgruppen, insbesondere die Phenylphosphon- bzw. Phenylphosphinsäure.

Als organische Schwefel-Sauerstoffsäuren können z.B. aliphatische und besonders aromatische Sulfonsäuren, wie Methansulfonsäure, Benzolsulfonsäure, Naphthalin-2-sulfonsäure, oder insbesondere p-Toluolsulfonsäure, verwendet werden.

Als Halogen enthaltende Carbonsäuren kommen z.B. Chloressigsäure, Dichloressigsäure, Trichloressigsäure und Trifluoressigsäure in Frage.

Geeignete Lewis-Säuren sind z.B. Halogenide von Elementen aus der Gruppe II, III, IV oder V des periodischen Systems der Elemente.

Besonders geeignete Lewis-Säuren sind Eisentrichlorid, Zinntetrachlorid, Antimonpentafluorid und insbesondere Aluminiumchlorid, Zinkchlorid, Bortrichlorid und Bortrifluorid.

Komplexe von Lewis-Säuren,die den erfindungsgemässen Gemischen als Katalysatoren eingesetzt werden können, sind u.a. der Aethylamin/Bortrichlorid-Komplex, der N,N-Dimethyl-n-octylamin/Bortrichlorid-Komplex, der Acetylacetanilid/Bortrifluorid-Komplex, der Dimethylanilin/Bortrichlorid-Komplex sowie der Tri-n-octylphosphin/Bortrichldorid-Komplex.

Die Menge des verwendeten Katalysators kann weniger als 5 Gew.-%, bezogen auf das Gesamtgewicht des härtbaren Gemisches, betragen.

Die Härtung der erfindungsgemässen Gemische wird im allgemeinen bei Temperaturen zwischen 150 und 350°C, besonders zwischen 180 und 300°C, vorgenommen.

Die erfindungsgemässen Gemische stellen viskose Flüssigharze bis niedrigschmelzende Festharze dar und zeichnen sich durch eine gute Reaktivität und hohe mechanische Eigenschaften der damit gehärteten Produkte aus, wie gute Biegefestigkeit und insbesondere Bruchzähigkeit. Die gehärteten Produkte weisen hohe Glasumwandlungstemperaturen auf und sind wenig spröde. Die erfindungsgemässen Stoffgemische können aus der Schmelze oder aus der Lösung appliziert werden, beispielsweise zum Imprägnieren von Glasfaser-, Kohlenstofffaser- oder Aramidfaser-Geweben, wie Fasergewebe aus der unter dem Handelsnamen Kevlar® bekannten Poly(1,4-phenylenterephthalamiden).

Die erfindungsgemässen Stoffgemische können vielseitig angewendet werden, z.B. als Laminier- oder Elektroharze, als Hochtemperatur-Klebstoffe oder zur Herstellung von Beschichtungen oder Formkörpern, als Ueberzugsmaterial, als Matrixharze für faserverstärkte Kunststoffe, wie Prepregs und Verbundwerkstoffe, oder als elektrische Isolierstoffe.

Gegenstand der Erfindung sind somit auch die Verwendung der erfindungsgemässen Gemische zur Herstellung von Formkörpern, Beschichtungen oder Verklebungen mittels Härtung und die so erhaltenen Produkte.

Die folgenden Beispiele erläutern die Erfindung näher.

### Herstellung bestimmter Ausgangsstoffe

### 1. Bis-[4-(allyl-bicyclo[2.2.1]hept-5-en-2,3-dicarbonsäureimidophenyl)]methan (nachfolgend als Bisallylnadicimid I bezeichnet)

102 g Allyl-bicyclo[2.2.1]hept-5-en-2,3-dicarbonsäureanhydrid, hergestellt gemäss Beispiel 1 des US Patents 3 105 839, und 198,3 g 4,4′-Diaminodiphenylmethan werden in 1000 ml Toluol vorgelegt und 16 Stunden am Wasserabscheider unter Rückfluss erhitzt. Die klare Reaktionslösung wird am Rotationsverdampfer eingeengt und der Rückstand 2 Stunden bei 120 °C im Hochvakuum getrocknet. Man erhält 380 g eines rotgelben, bei Raumtemperatur festen Harzes mit einem Erweichungspunkt von 56°C und einem durch Gelpermeationschromatographie (Tetrahydrofuran) ermittelten Molekulargewicht von 550 (M̅n) und 571 (M̅w).

| Analyse: | % C | % H | % N |
|---|---|---|---|
| berechnet für C₃₇H₃₄N₂O₇ | 77,87 | 6,01 | 4,91 |
| gefunden | 77,71 | 6,06 | 4,96 |

### 2. 2,2-Bis-(4-cyanatophenyl)-propan (nachfolgend als Bisphenol A-dicyanat bezeichnet)

Hergestellt aus Bisphenol A und Bromcyan gemäss Beispiel 1 der DE-OS 25 29 486.

### Beispiele 1-3

50 g Bisallylnadicimid I, 50 g Bisphenol A-dicyanat und 10 g, 15 g oder 20 g des Polyätherimids ULTEM® 1000 (Handelsprodukt der Fa. General Electric) werden in 200 g Methylenchlorid gelöst. Das Lösungsmittel wird dann bei 160°C am Rotationsverdampfer abdestilliert. Anschliessend erhitzt man während 10 Minuten auf 180°C und destilliert das Lösungsmittel im Hochvakuum vollständig ab. Die Mischungen werden zu Platten der Grösse 135x135x4 mm vergossen und 4 Stunden bei 180°C, 1 Stunde bei 200°C, 1 Stunde bei 220°C und 6 Stunden bei 250°C gehärtet. Die Eigenschaften der gehärteten Formkörper sind in Tabelle I angegeben.

### Beispiel 4

Nach dem in den Beispielen 1-3 beschriebenen Verfahren wird eine Mischung aus 50 g Bisallylnadicimid I, 50 g Bisphenol A-dicyanat und 10 g des Polysulfons UDEL® P1800 (Handelsprodukt der Fa. UCC) hergestellt, zu Platten vergossen und gehärtet. Die Eigenschaften der gehärteten Platten sind in Tabelle I angegeben.

### Beispiel 5

Nach dem in den Beispielen 1-3 beschriebenen Verfahren wird eine Mischung aus 50 g Bisallylnadicimid I, 50 g Bisphenol A-dicyanat und 15 g eines aus Benzophenontetracarbonsäuredianhydrid und Phenylindandiamin hergestellten Polyimids mit, folgender wiederkehrender Struktureinheit 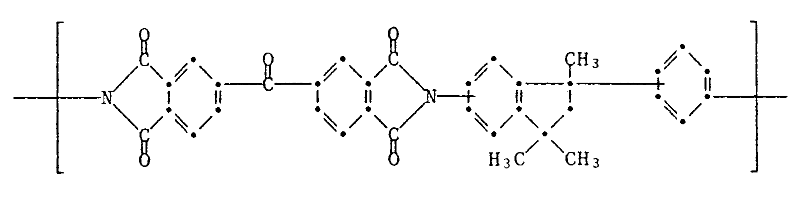
und einer inhärenten Viskosität von 0,84 dl/g, gemessen bei 25°C in N-Methylpyrrolidon, hergestellt, zu Platten vergossen und gehärtet. Die Eigenschaften der gehärteten Platten sind in Tabelle I angegeben.

### Beispiel 6

50 g Bisallylnadicimid I, 50 g Bisphenol A-dicyanat und 20 g des Polyäthersulfons VICTREX® 100 (Handelsprodukt der Fa. ICI) werden in 200 ml Dimethylformamid unter Erwärmen gelöst. Der grösste Teil des Lösungsmittels wird bei 160°C unter Vakuum am Rotationsverdampfer abdestilliert. Das Gemisch wird dann während 10 Minuten auf 180°C erhitzt und das Lösungsmittel vollständig unter Hochvakuum abdestilliert. Die klare, homogene Mischung wird zu Platten vergossen und wie in Beispiel 1 beschrieben gehärtet. Die gemessenen Eigenschaften der gehärteten Platten sind in Tabelle I angegeben.

**Tabelle I**

| Beispiel Nr. | 1 | 2 | 3 | 4 | 5 | 6 |
|---|---|---|---|---|---|---|
| T_{G} TMA ¹⁾ (°C) | 201;275 | 203;265 | 205;267 | 265 | 276 | 218;275 |
| Biegefestigkeit n. ISO 178 (N/mm²) | 127 | 138 | 156 | 130 | 126 | 147 |
| Randfaserdehnung n. ISO 178 (%) | 4,7 | 5,3 | 7,5 | 5,2 | 4,7 | 7,7 |
| Bruchzähigkeit G_{IC}²⁾ (J/m²) | 130 | 330 | 358 | 174 | 171 | 265 |
| 10 % dynamischer Gewichtsverlust ³⁾ bei (°C) | 385 | 385 | 385 | 380 | 385 | 385 |

| | | | | | | |
|---|---|---|---|---|---|---|
| ¹) bestimmt mit TMA-943, Dupont 9900 Thermo Analyser) | | | | | | |
| ²) Compact Tension Test (ASTM E 399-789), bestimmt mit Zugprüfmaschine ZWICK 1494 | | | | | | |
| ³) Aufheizgeschwindigkeit 10°C/Min. unter Stickstoff (bestimmt mit TG 50, Mettler TA 3000) | | | | | | |

## Patentansprüche

1. Heisshärtbare Gemische, enthaltend
(a) 5 bis 95 Gew.-% mindestens einer aromatischen Di- oder Polycyanatverbindung oder eines Präpolymeren davon,
(b) 95 bis 5 Gew.-% mindestens einer Verbindung der Formel I oder II 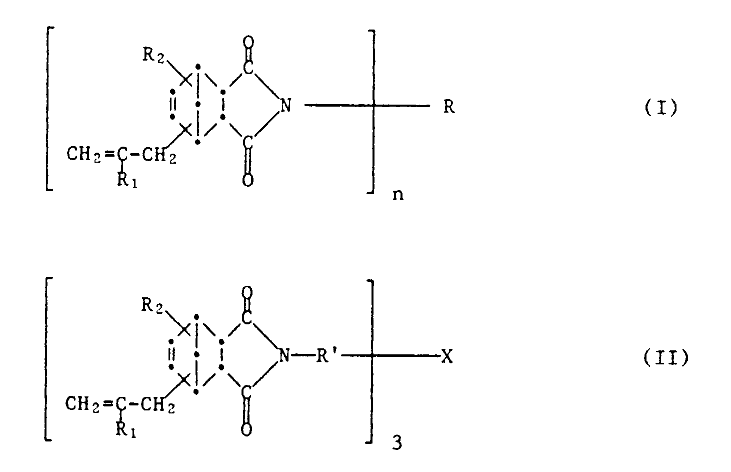 oder eines Präpolymeren einer Verbindung der Formel I oder II,
(c) 0 bis 50 Gew.-%, bezogen auf die Summe von (a) und (b), mindestens einer Verbindung der Formel III 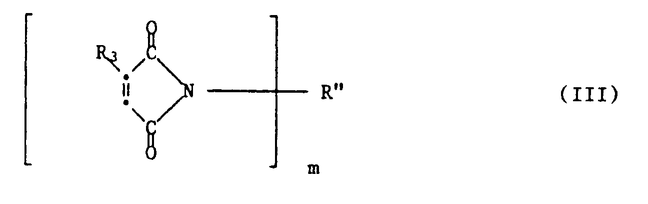 und
(d) 0,1 bis 50 Gew.-%, bezogen auf die Summe con (a) und (b) eines Thermoplasten mit einer Glasumwandlungstemperatur von mindestens 120°C,
worin in den Formeln
R₁, R₂ und R₃ unabhängig voneinander je ein Wasserstoffatom oder Methyl bedeuten,
n 1 oder 2 und m 2 oder 3 bedeuten,
R, falls n 1 bedeutet, ein Wasserstoffatom, Alkyl mit 1-12 C-Atomen, Alkenyl mit 3-6 C-Atomen, Cycloalkyl mit 5-8 C-Atomen, Aryl mit 6-10 C-Atomen oder Benzyl, oder, falls n 2 bedeutet, -CₚH₂ₚ- mit p = 2-20, Arylen mit 6-10 C-Atomen oder eine Gruppe der Formel IV 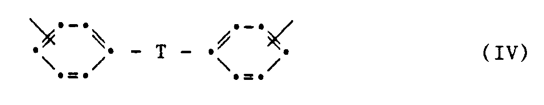 mit T = Methylen, Isopropyliden, CO, O, S oder SO₂ bedeutet, X für 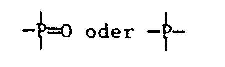 steht und R′ -C_{q}H_{2q}- mit q = 2-20, -CᵣH₂ᵣ-O-mit r = 2-6, meta- oder para-Phenylen, meta- oder para-Phenylenoxy bedeutet, wobei das Sauerstoffatom an die Gruppe X gebunden ist, und
R˝ einen m-wertigen organischen Rest mit 2-30 C-Atomen darstellt.

2. Gemische gemäss Anspruch 1, enthaltend die Komponente (a) in einer Menge von 20 bis 80 Gew.-%, die Komponente (b) in einer Menge von 80 bis 20 Gew.-% , die Komponente (c), bezogen auf die Summe von (a) und (b), in einer Menge von 0 bis 30 Gew.-% und die Komponente (d), bezogen auf die Summe von (a) und (b), in einer Menge von 5 bis 40 Gew.-%.

3. Gemische gemäss Anspruch 1, enthaltend als Komponente (a) eine Dicyanatverbindung oder eine Mischung aus einer Dicyanatverbindung mit dem entsprechenden Präpolymer.

4. Gemische gemäss Anspruch 1, enthaltend als Komponente (b) eine Verbindung der Formel I, worin R₁ und R₂ je ein Wasserstoffatom bedeuten und R, falls n = 1 ist, für Wasserstoff, Alkyl mit 1-8 C-Atomen, Allyl, Cyclohexyl, Phenyl oder Benzyl steht, oder, falls n = 2 ist, für -(CH₂)ₚ-mit p = 2-12, m- oder p-Phenylen oder für eine Gruppe der Formel IV steht, worin T die Methylengruppe, O oder SO₂ bedeutet.

5. Gemische gemäss Anspruch 1, enthaltend als Komponente (b) eine Verbindung der Formel I, worin R₁ und R₂ ein Wasserstoffatom und R, falls n = 1 ist, Allyl, oder falls n = 2 ist, -(CH₂)₆- oder 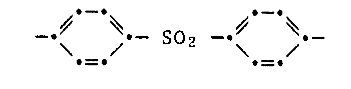 und insebesondere 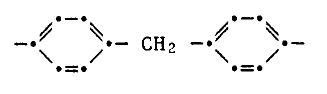 bedeuten.

6. Gemische gemäss Anspruch 1, enthaltend als Komponente (a) 2,2-Bis-(4-cyanatophenyl)-propan und als Komponente (b) Allyl-bicyclo[2.2.1]hept-5-en-2,3-dicarbonsäure-N-allylamid, Bis-[4-allyl-bicyclo[2.2.1]hept-5-en-2,3-dicarbonsäureimidophenyl]methan oder N,N′-Hexamethylen-bis-(allyl-methyl-bicyclo[2.2.1]hept-5-en-2,3-dicarbonsäureimid) oder ein Gemisch dieser Verbindungen.

7. Gemische gemäss Anspruch 1, enthaltend als Komponente (b) eine Verbindung der Formel II, worin 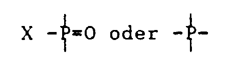 darstellt und R′ -(CH₂)_{q}- mit q = 2-4, meta- oder para-Phenylen, meta- oder para-Phenylenoxy bedeutet.

8. Gemische gemäss Anspruch 1, enthaltend als Komponente (c) eine Verbindung der Formel III, worin m die Zahl 2, R₃ ein Wasserstoffatom und R˝ -(CH₂)ₚ- mit p = 2-12, m- oder p-Phenylen, m- oder p-Xylylen, 1,4-Cyclohexylen, 1,4-Bis(methylen)-cyclohexylen, den Rest des 4,4′-Bicyclohexylmethans und vor allem einen Rest der Formel 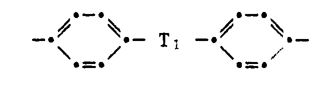 bedeuten, worin T₁ für O, CH₂ oder SO₂ steht.

9. Gemische gemäss Anspruch 1, enthaltend als Komponente (d) einen Thermoplasten mit einer Glasumwandlungstemperatur von 150 bis 350°C.

10. Gemische gemäss Anspruch 1, enthaltend als Komponente (d) ein Polyimid, Polyätherimid oder Polyäthersulfon.

11. Verwendung der härtbaren Gemische gemäss Anspruch 1 zur Herstellung von Formkörpern, Beschichtungen oder Verklebungen mittels Härtung.

12. Die aus den Gemischen gemäss Anspruch 1 durch Härtung erhaltenen Formkörper, Beschichtungen oder Verklebungen.

## Claims

1. A heat curable mixture comprising
(a) 5 to 95 % by weight of at least one aromatic dicyanate or polycyanate compound or a prepolymer thereof,
(b) 95 to 5 % by weight of at least one compound of formula I or II 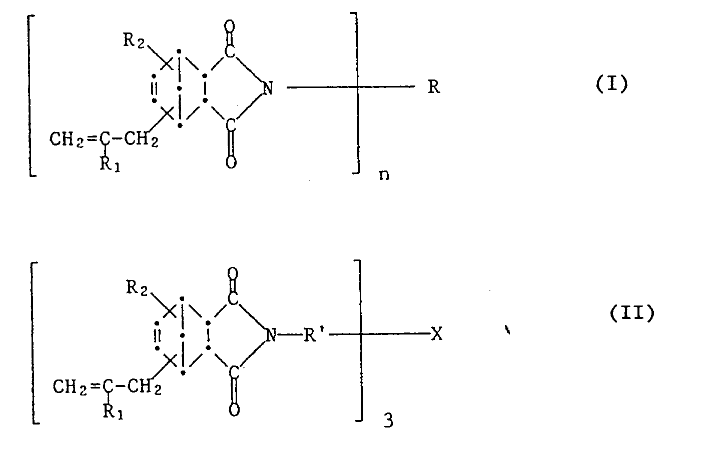 or of a prepolymer of a compound of formula I or II,
(c) 0 to 50 % by weight, based on the sum of (a) and (b), of at least one compound of formula III 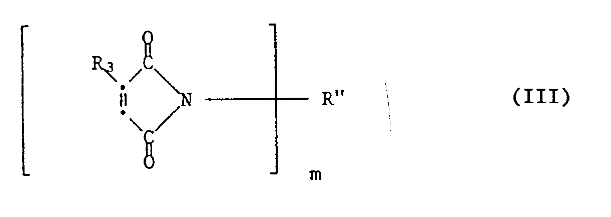 and
(d) 0.1 to 50 % by weight, based on the sum of (a) and (b), of a thermoplastic having a glass transition temperature of at least 120°C, in which formulae above
R₁, R₂ and R₃ are each independently of one another a hydrogen atom or methyl,
n is 1 or 2 and m is 2 or 3,
R, if n is 1, is a hydrogen atom, alkyl of 1 to 12 carbon atoms, alkenyl of 3 to 6 carbon atoms, cycloalkyl of 5 to 8 carbon atoms, aryl of 6 to 10 carbon atoms or benzyl, or, if n is 2, is -CₚH₂ₚ, in which p is 2 to 20, arylene of 6 to 10 carbon atoms or a group of formula IV 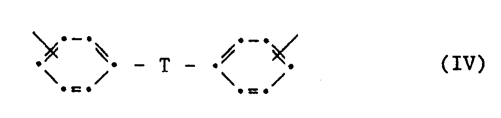 where T is methylene, isopropylidene, CO, O, S or SO₂,
X is -P=O or -P-,
R' is -C_{q}H_{2q}-, in which q is 2 to 20, -CᵣH₂ᵣ-O-, in which r is 2 to 6, meta- or para-phenylene, meta- or para-phenyleneoxy, the oxygen atom being attached to the group X and
R'' is an organic radical of valency m containing 2 to 30 carbon atoms.

2. A mixture according to claim 1, which contains 20 to 80 % by weight of component (a), 80 to 20 % by weight of component (b), 0 to 30 % by weight of component (c), based on the sum of (a) and (b), and 5 to 40 % by weight of component (d), based on the sum of (a) and (b).

3. A mixture according to claim 1, wherein component (a) is a dicyanate compound or a mixture of a dicyanate compound and the corresponding prepolymer.

4. A mixture according to claim 1, wherein component (b) is a compound of formula I, in which R₁ and R₂ are each a hydrogen atom and R, if n is 1, is hydrogen, alkyl of 1 to 8 carbon atoms, allyl, cyclohexyl, phenyl or benzyl, or, if n is 2, is -(CH₂)ₚ-, in which p is 2 to 12, m- or p-phenylene or a group of formula IV, in which T is the methylene group, O or SO₂.

5. A mixture according to claim 1, wherein component (b) is a compound of formula I, in which R₁ and R₂ are each a hydrogen atom and R, if n is 1, is allyl or, if n is 2, is -(CH₂)₆- or 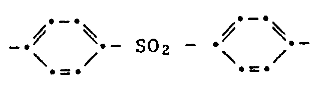 and especially

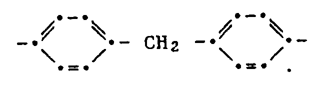

6. A mixture according to claim 1, wherein component (a) is 2,2-bis(4-cyanatophenyl)propane and component (b) is N-allylallylbicyclo[2.2.1]hept-5-ene-2,3-dicarboxamide, bis[4-allylbicyclo[2.2.1]hept-5-ene-2,3-dicarboximidophenyl]methane or N,N'-hexamethylenebis(allylmethylbicyclo[2.2.1]hept-5-ene-2,3-dicarboximide or a mixture of said compounds.

7. A mixture according to claim 1, wherein component (b) is a compound of formula II, in which
X is -P=O or -P- and
R' is -(CH₂)_{q}-, in which q is 2 to 4, meta- or para-phenylene or meta- or para-phenyleneoxy.

8. A mixture according to claim 1, wherein component (c) is a compound of formula III, in which m is 2, R₃ is a hydrogen atom and R'' is -(CH₂)ₚ-, in which p is 2 to 12, m- or p-phenylene, m- or p-xylylene, 1,4-cyclohexylene, 1,4-bis(methylene)cyclohexylene, the radical of 4,4'-bicyclohexylmethane and, in particular, a radical of formula 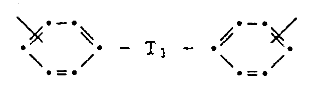 in which T₁ is O, CH₂ or SO₂.

9. A mixture according to claim 1, wherein component (d) is a thermoplastic having a glass transition temperature in the range from 150 to 350°C.

10. A mixture according to claim 1, wherein component (d) is a polyimide, polyether imide or polyether sulfone.

11. Use of a curable mixture according to claim 1 for the production of mouldings, coatings or adhesive bonds.

12. A moulding, coating or adhesive bond produced from a mixture according to claim 1 by curing.

## Revendications

1. Mélanges thermodurcissables, contenant :
(a) 5 à 95 % en poids d'au moins un dicyanate ou polycyanate aromatique ou d'un prépolymère de ces composés,
(b) 95 à 5 % en poids d'au moins un composé de formule I ou II : 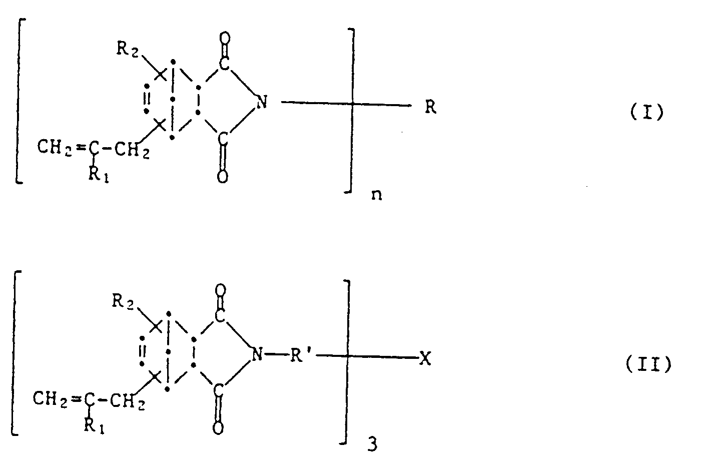 ou d'un prépolymère d'un composé de formule I ou II ,
(c) 0 à 50 % en poids, par rapport à la somme de (a) et de (b), d'au moins un composé de formule III 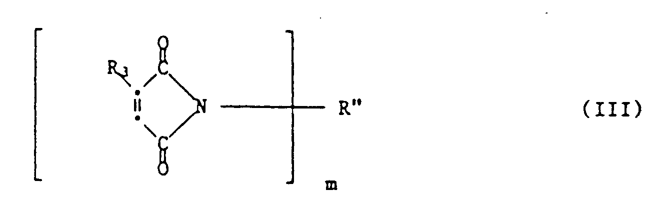 et,
(d) 0,1 à 50 % en poids, par rapport à la somme de (a) et (b), d'une matière thermoplastique ayant une température de transition vitreuse d'au moins 120°C, et, dans les formules
R₁,R₂ et R₃ représentent chacun, indépendamment l'un de l'autre, un atome d'hydrogène ou un groupe méthyle,
n est un nombre valant 1 ou 2 et m vaut 2 ou 3,
R, si n vaut 1, représente un atome d'hydrogène, un groupe alkyle ayant 1 à 12 atomes de carbone, alcényle ayant 3 à 6 atomes de carbone, cycloalkyle ayant 5 à 8 atomes de carbone, aryle ayant 6 à 10 atomes de carbone ou benzyle, et si n vaut 2, R₄ représente un groupe -CₚH₂ₚ-, dans lequel p vaut 2 à 20, un groupe arylène ayant 6 à 10 atomes de carbone ou un groupe de formule IV 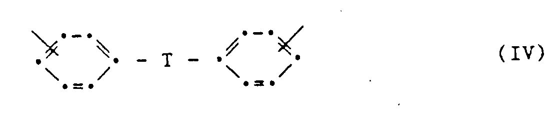 dans laquelle T représente un groupe méthylène, isopropylidène, CO, O, S ou SO₂,
X représente 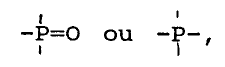 et R' représente un groupe -C_{q}H_{2q}-, avec q valant 2 à 20, un groupe -CᵣH₂ᵣ-O-avec r valant 2 à 6, un groupe méta- ou para-phénylène, méta- ou para-phénylenoxy, l'atome d'oxygène étant fixé sur le groupe X,
et
R'' représente un reste organique de valence m comportant 2 à 30 atomes de carbone .

2. Mélanges selon la revendication 1, contenant le composant (a) en une quantité de 20 à 80 % en poids, le composant (b) en une quantité de 80 à 20 % en poids, le composant (c) par rapport à la somme de (a) et de (b) en une quantité de 0 à 30 % en poids, et le composant (d) par rapport à la somme de (a) et de (b), en une quantité de 5 à 40 %.

3. Mélanges selon la revendication 1,contenant comme composant (a) un dicyanate ou un mélange d'un dicyanate avec le prépolymère correspondant.

4. Mélanges selon la revendication 1, contenant comme composant (b) un composé de formule I, dans laquelle R₁ et R₂ représentent chacun un atome d'hydrogène et, si n vaut 1, R représente un atome d'hydrogène, un groupe alkyle ayant 1 à 8 atomes de carbone, allyle, cyclohexyle, phényle ou benzyle ou bien, si n vaut 2, R représente un groupe -(CH₂)ₚ- avec p valant 2 à 12, un groupe m- ou p-phénylène ou un groupe de formule IV, dans laquelle T représente le groupe phénylène , O ou SO₂.

5. Mélanges selon la revendication 1, contenant comme composant (b) un composé de formule I, dans laquelle R₁ et R₂ représentent chacun un atome d'hydrogène, et si n vaut 1, R représente un groupe allyle, ou si n vaut 2, R représente -(CH₂)₆- ou 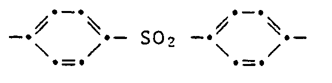 et notamment

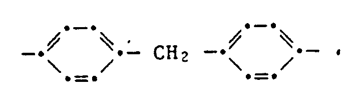

6. Mélanges selon la revendication 1, contenant comme composant (a) le 2,2-bis-(4-cyanotophényl)-propane et, comme composant (b), le N-allylamide d'acide allyl-bicyclo[2.2.1.]hept-5-ène-2,3-dicarboxylique, le bis-[4-allyl-bicyclo[2.2.1.]hept-5-ène-2,3-dicarboxy midophényl] méthane ou le N,N'-hexaméthylène-bis-(allyl-méthyl-bicyclo [2.2.1.]hept-5-ène-2,3-dicarboxymide) ou un mélange de ces composés.

7. Mélanges selon la revendication 1, contenant comme composant (b) un composé de formule II, dans laquelle X représente -P=O ou -P-, et R' représente un groupe -(CH₂)_{q}- avec q valant 2 à 4, un groupe méta- ou para-phénylène ou méta- ou para-phénylenoxy.

8. Mélanges selon la revendication 1, contenant comme composant (c) un composé de formule III, dans laquelle n est un nombre valant 2, R₃ représente un atome d'hydrogène et R'' représente un groupe -(CH₂)ₚ- avec p valant 2 à 12, un groupe m- ou p-phénylène, m- ou p-xylylène, 1,4-cyclohexylène, 1,4-bis(méthylène)-cyclohexylène, le reste du 4,4'-bicyclo-hexylméthane et, surtout, un reste de formule 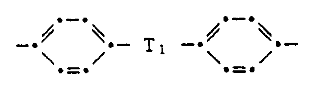 dans laquelle T₁ représente O, CH₂ ou SO₂.

9. Mélanges selon la revendication 1, contenant comme composant (d) une matière thermoplastique ayant une température de transition vitreuse de 150 à 350°C.

10. Mélanges selon la revendication 1, contenant comme composant (d) un polyimide, un polyéther imide ou une polyéther sulfone.

11. Utilisation des mélanges durcissables selon la revendication 1 pour produire, par durcissement, des corps ou objets moulés, des revêtements ou des collages.

12. Les objets moulés, revêtements ou collages obtenus par durcissement, à partir des mélanges selon la revendication 1.
